# EUROPEAN PATENT APPLICATION

(11) **EP 4 752 651 A1**
(43) Date of publication of application: **03.06.2026**
(21) Application number: 25186609.1
(22) Date of filing: 01.07.2025
(51) Int. Cl.: G05B 19/042, G06F 11/16

(54) **SAFETY TAG TRANSFER DURING SAFETY CONTROLLER QUALIFICATION**

(30) Priority: 27.09.2024 US 202418898812
(71) Applicant: Rockwell Automation Technologies, Inc., Mayfield Heights, OH 44124 (US)
(72) Inventor: Kudva, Ashvin K., Mayfield Heights, OH, 44124 (US); Stay, Nicholas L., Milwaukee, WI, 53204 (US); Lardi, Christopher, Mayfield Heights, OH, 44124 (US); Shelvik, Norman S., Milwaukee, WI, 53204 (US)
(74) Representative: Grünecker Patent- und Rechtsanwälte PartG mbB

(57) **Abstract**

A system and method for transferring data between safety controllers during qualification establishes a dedicated communication channel between a first communication core executing in a first safety controller and a second communication core executing in a second safety controller. Safety data is prepared for transfer between the first and second safety controllers. Parameters for the dedicated communication channel are transferred from the first communication core to a first safety core executing in the first safety controller. The safety data is transferred from the first safety core to a second safety core executing in the second safety controller. The safety data received at the second safety controller is verified with the second safety core. Operation of a safety task is enabled in tandem on the first safety core and the second safety core upon successful transfer of the safety data from the first safety controller to the second safety controller.

## Description

### BACKGROUND INFORMATION

The subject matter disclosed herein relates to an industrial control system which is configured to provide operation that achieves either higher availability or a higher safety integrity. More specifically, a safety function is muted during qualification of a second safety controller by a first safety controller in the control system to prevent spurious safety faults from occurring.

As is known to those skilled in the art, industrial controllers are specialized electronic computer systems used for the control of industrial processes or machinery. An example industrial controller is a programmable logic controller (PLC) used in a factory environment. Industrial controllers differ from conventional computers in a number of ways. Physically, they are constructed to be substantially more robust against shock and damage and to better resist external contaminants and extreme environmental conditions. The processors and operating systems of industrial controllers are optimized for real-time control and execute languages allowing ready customization of programs to comport with a variety of different controller applications. Industrial controllers may have an operator interface for accessing, controlling, and/or monitoring the industrial controller. An example operator interface can include a locally connected terminal having a keyboard, mouse, and display.

One important application of industrial controllers is in "High Availability (HA) control." A HA control system attempts to maintain operation of the control system even in the event of a failure within the system. In order to maintain operation, a HA control system typically includes redundant subsystems such as redundant industrial controllers, redundant backplanes, redundant bridges, redundant adapters, redundant input/output (IO) modules, redundant motor drives, and/or redundant communication networks. Physical redundancy is provided in each subsystem such that if a single failure occurs in one of the elements in the subsystem, operation of the subsystem can continue via the redundant element(s). For example, if one of the redundant controllers fails, operation can continue using the other controller(s). Similarly, if a failure occurs on one network, backplane, bridge, adapter or IO module, the operation can continue via one or more redundant networks, backplanes, bridges, adapters, or IO modules.

During operation, a HA control system may utilize one component as an active component and the other component as a back-up component. Initial control of the controlled system is performed by the active component. Upon failure of the active component, switches, for example, may disconnect the active component and connect the back-up component to maintain operation of the controlled system. A brief switchover time occurs as one component is disconnected and the other component is connected.

Another important application of industrial controllers is in "safety control". Safety control is used in applications where failure of an industrial controller can create a risk of injury to humans. While safety control is closely related to reliability, safety control places additional emphasis on ensuring correct operation even if it reduces equipment availability. Safety industrial control systems are not optimized for "availability," that is being able to function for long periods of time without error, but rather for "safety," which is being able to accurately detect error to shut down. Safety industrial controllers normally provide a predetermined safe state for their outputs upon a safety shutdown, the predetermined values of these outputs being intended to put the industrial process into its safest static mode. For that reason, safety controllers may provide run time diagnostic capabilities to detect incorrect operation and to move the control system to predefined "safety states" if a failure is detected. The safety states will depend on the particular process being implemented and will cause the actuators to assume a state predetermined to be safest when control correctness cannot be ensured. For example, upon detection of a failure, an actuator controlling cutting machinery might move that machinery to a stop state while an actuator providing air filtration might retain that machinery in an on state.

Safety control capability may be designated, for example, by "safety integrity levels" (SIL) defined under standard IEC 61508 and administered by the International Electrotechnical Commission (IEC) under rule hereby incorporated by reference. Standard IEC EN 61508 defines four SIL levels of SIL-1 to SIL-4 with higher numbers representing higher amounts of risk reduction. Obtaining a desired SIL rating requires a certain degree of diagnostic coverage for components within a system. The degree of diagnostic coverage is defined according to a percentage likelihood that a failure of a component within a system will be detected. Low diagnostic coverage, for example, may require only a sixty percent (60%) chance that a failure will be detected. In contrast, high diagnostic coverage, required for a SIL 3 rating, may require a ninety-nine percent (99%) chance that a failure will be detected. Mitigation of a risk occurring increases the SIL rating and may be achieved by detecting a failure in a system that may cause a dangerous operating environment before the dangerous operating environment can occur. Therefore, determination of a SIL rating is based, at least in part, on the ability of a system to detect a fault condition and enter a safe state in response to detecting the fault condition.

If two safety controllers are combined to form a high-availability system, it may be desirable to have both safety controllers monitoring the control system in tandem. Two safety controllers monitoring the control system in tandem may provide a higher SIL rating than is achieved by a single safety controller monitoring the same control system. Therefore, when two safety controllers are utilized for a high-availability system, operation in tandem would be preferred to having one safety controller operate as a primary controller and having the second safety controller operate as a backup controller, where the second safety controller only operates after a switchover from the primary controller.

However, having two safety controllers operate in tandem is not without certain challenges. When power cycles, different devices will become powered up and fully operational at different rates. Even identical components, such as two controllers, will power up at different rates. Further, each safety controller may verify operation of the other controller to achieve the higher safety rating. If the safety controller which begins executing first performs a diagnostic check prior the second controller becoming operational, the safety controller which was operational first may detect a fault condition and cause a spurious trip putting the industrial control system into a safe operating state before the second controller is fully operational.

Thus, it would be desirable to provide coordination between multiple safety controllers operating in a high availability configuration to prevent spurious safety faults.

### BRIEF DESCRIPTION

According to one embodiment of the invention, a method for transferring data between safety controllers during qualification includes disabling a safety operation in a first safety controller and transferring safety data from a first safety core executing in the first safety controller to a second safety core executing in a second safety controller. The second safety core verifies correct transfer of the safety data and stores the safety data in a safety memory present on the second safety controller. The safety operation is enabled in the first safety controller and the second safety controller in tandem when the safety data is present on the second safety controller.

According to another embodiment of the invention, an industrial control system includes a first safety controller, a second safety controller, and a dedicated communication interface connected between the first safety controller and the second safety controller. The first safety controller includes a memory and a processor. The memory in the first safety controller is configured to store a first set of instructions to perform a control function, a second set of instructions to perform a diagnostic function, a third set of instructions to perform a qualification function, a fourth set of instructions to perform a communication function, and safety data. The processor in the first safety controller has a first core operative to execute the control function, a second core operative to selectively execute the diagnostic function and the qualification function, and a third core operative to execute the communication function. The second safety controller includes a memory and a processor. The memory in the second safety controller is configured to store a first set of instructions to perform a control function, a second set of instructions to perform a diagnostic function, and a third set of instructions to perform a qualification function, a fourth set of instructions to perform a communication function, and safety data. The processor in the second safety controller has a first core operative to execute the control function, a second core operative to selectively execute the diagnostic function and the qualification function, and a third core operative to execute the communication function. The first safety controller is operative to disable the diagnostic function and enable the qualification function on the second core of the processor corresponding to the first safety controller. The first safety controller is further operative to transmit the safety data from the memory of the first safety controller to the second safety controller via the dedicated communication interface using the qualification function. The second safety controller is operative to store the safety data received from the first safety controller in the memory of the second safety controller with the qualification function executing on the second safety controller. The second safety controller is further operative to disable the qualification function and enable the diagnostic function in the second core of the processor corresponding to the second safety controller to execute the diagnostic function in tandem with the diagnostic function executing in the second core of the processor corresponding to the first safety controller.

According to still another embodiment of the invention a method for transferring data between safety controllers during qualification establishes a dedicated communication channel between a first communication core executing in a first safety controller and a second communication core executing in a second safety controller. Safety data is prepared for transfer from the first safety controller to the second safety controller, and parameters for the dedicated communication channel are transmitted from the first communication core to a first safety core executing in the first safety controller. The safety data is transferred from the first safety core to a second safety core executing in the second safety controller, and the safety data received at the second safety controller is verified with the second safety core. Operation of a safety task is enabled in tandem on the first safety core and the second safety core upon successful transfer of the safety data from the first safety controller to the second safety controller.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a block diagram of an industrial control system according to one embodiment of the present invention;
FIG. 2 is a block diagram further representing aspects of the industrial control system of Fig. 1;
FIG. 3 is a block diagram further representing aspects of the processor module of the industrial control system of Fig. 1
FIG. 4 is a block diagram representing data paths in a concurrent connection between modules in the industrial control system of Fig. 1;
FIG. 5 illustrates the industrial control system of Fig.1 incorporating two safety controllers;
FIG. 6 is a timing diagram illustrating a start-up sequence for two safety controllers operating in a high-availability operating mode; and
FIG. 7 is a timing diagram illustrating additional steps for transferring safety data between the two safety controllers of Fig. 6.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

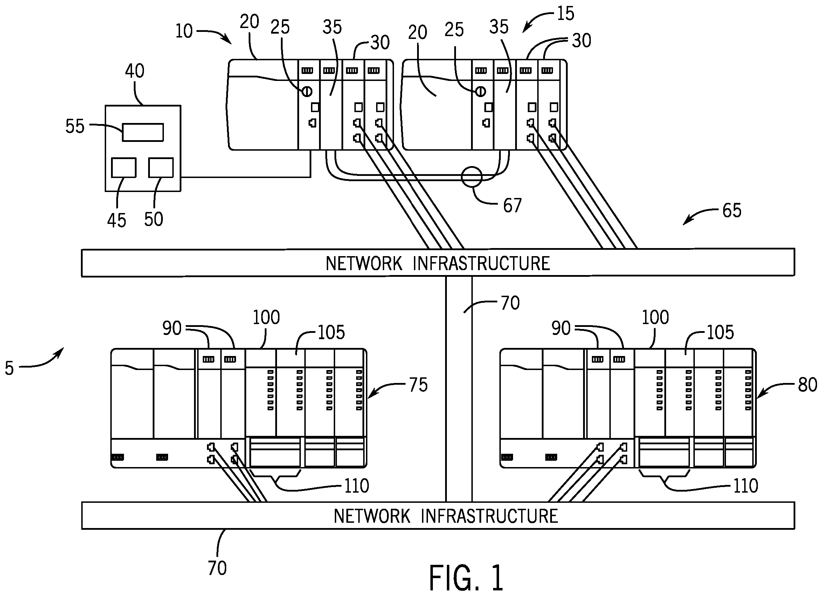

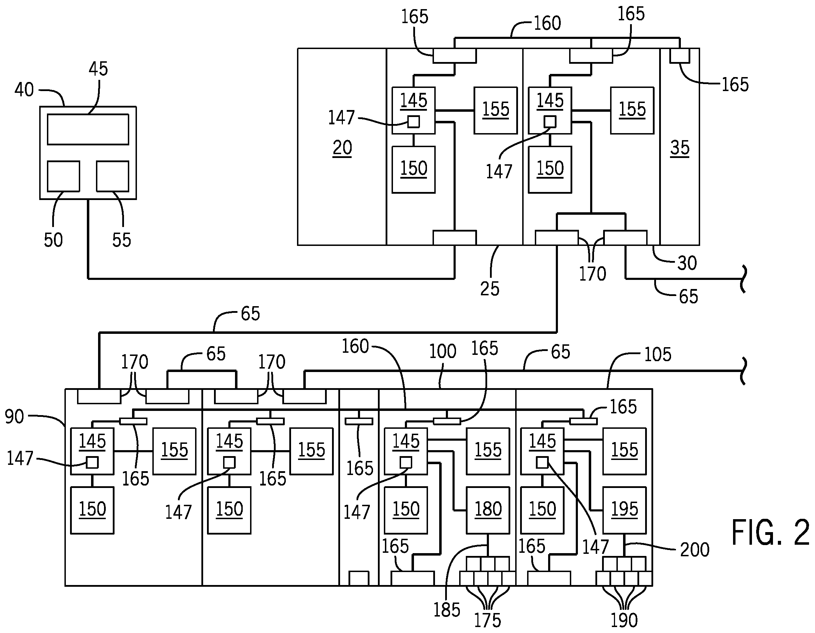

Turning first to Fig. 1 and Fig. 2, an exemplary industrial control system 5 with redundant subsystems is illustrated. The redundant subsystems may be provided to achieve a desired safety rating and/or a desired level of availability. The inputs and outputs are provided to two controllers and each controller monitors operation of the inputs and outputs as well as operation of the other controller to ensure correct operation of the control system 5. The illustrated control system 5 is an exemplary environment incorporating one embodiment of the present invention.

The industrial control system 5 includes a first controller chassis 10 and a second controller chassis 15. As illustrated, the first and second controller chassis 10 and 15 are modular and may be made up of numerous different modules. Additional modules may be added or existing modules removed and the first and second controller chassis 10 and 15 reconfigured to accommodate the new configuration. Optionally, either the first controller chassis 10 and/or the second controller chassis 15 may have a predetermined and fixed configuration. The first and second controller chassis 10 and 15 may have a single backplane or dual backplanes to facilitate communication between modules in the chassis. In the exemplary system shown, both the first and second controller chassis 10 and 15 include a power supply module 20, a controller module (or also referred to as simply "controller") 25, and network bridge modules 30. Each controller chassis 10 and 15 is further shown with an additional module 35 that may be selected according to the application requirements. For example, the additional module 35 may be an analog or digital input or output module, which will be referred to herein generally as an **IO** module. Optionally, each chassis may be configured to have multiple additional modules 35 according to the application requirements. For ease of illustration, a single additional module 35 is illustrated and the illustrated module is a redundancy module to facilitate dual chassis controller redundancy.

An operator interface is shown connected to the industrial control system. The operator interface 40 can include a processing device 45 and an input device 50. The input device 50 can include, but is not limited to, a keyboard, touchpad, mouse, track ball, or touch screen. The operator interface can further include an output device 55. The output device 55 can include, but is not limited to, a display, a speaker, or a printer. It is contemplated that each component of the operator interface 40 may be incorporated into a single unit, such as an industrial computer, laptop, or tablet computer. It is further contemplated that multiple operator interfaces can be distributed about the industrial control system 5. The operator interface 40 may be used to display operating parameters and/or conditions of the controlled machine or process, receive commands from the operator, or change and/or load a control program or configuration parameters. An interface cable connects the operator interface 40 to the controller 25 on the first controller chassis 10.

The first and second controller chassis 10 and 15 are connected to other devices by a network 65 according to the application requirements. A redundant network topology is established by connecting the network bridge modules 30 of the controller chassis 10 and 15 to a redundant network infrastructure 70 by a suitable network of cables and/or network devices, such as routers, switches, gateways, or the like. The network infrastructure 70 connects to a first remote chassis 75 and a second remote chassis 80. It is contemplated that the network cables may be custom cables configured to communicate via a proprietary interface or may be any standard industrial network, including, but not limited to, Ethernet/IP^{®}, DeviceNet^{®}, ControlNet^{®}, or OPC UA^{®}. The network bridge modules 30 and the network 70 are configured to communicate according to the protocol of the network to which it is connected and may be further configured to translate messages between two different network protocols. Dedicated interface cables 67 connect the redundancy modules 35 in each chassis to each other, providing a dedicated communication channel between the controller modules 25. According to another embodiment of the invention, multiple controller modules 25 may be positioned in a single chassis. A dedicated communication interface is provided between the controller modules 25, where the dedicated communication interface may be the interface cable 67 or a dedicated backplane communication bus.

The first and second remote chassis 75 and 80 are positioned at varying positions about the controlled machine or process. As illustrated, the first and second remote chassis 75 and 80 are modular and may be made up of numerous different modules connected together in a chassis or mounted on a rail. Additional modules may be added or existing modules removed and the remote chassis 75 or 80 reconfigured to accommodate the new configuration. Optionally, the first and second remote chassis 75 and 80 may have a predetermined and fixed configuration. The first and second remote chassis 75 and 80 may have a single backplane or dual backplanes to facilitate communication between modules in the chassis. As illustrated, the first and second remote chassis 75 and 80 each includes a pair of network adapter modules 90, an input module 100, and an output module 105. Each network adapter module 90 is connected to the redundant network infrastructure 70 by a suitable network of cables. Each of the input modules 100 is configured to receive input signals from controlled devices, and each of the output modules 105 is configured to provide output signals to the controlled devices. Optionally, still other modules may be included in a remote chassis. Dual or triple redundant input modules 100 and/or output modules 105 may be included in a remote and/or controller chassis. It is understood that the industrial control network, industrial controller, and remote chassis may take numerous other forms and configurations without deviating from the scope of the invention. It should also be understood that an input module 100 and an output module 105 can form an IO module 110.

Referring next to Fig. 2, a portion of the exemplary industrial control system of Fig. 1 is illustrated in block diagram form. It is contemplated that each of the modules in the system may include a processor 145 and a memory 150. The processors 145 are configured to execute instructions and to access or store operating data and/or configuration parameters stored in the corresponding memory 150. The processors 145 are suitable processors according to the node requirements. It is contemplated that the processors 145 may include a single processing device or multiple processing devices executing in parallel and may be implemented in separate electronic devices or incorporated on a single electronic device, such as a field programmable gate array (FPGA) or application specific integrated circuit (ASIC). The processors 145 include random access memory 147 for processing runtime data. The memory devices 150 are non-transitory storage mediums that may be a single device, multiple devices, or may be incorporated in part or in whole within the FPGA or ASIC.

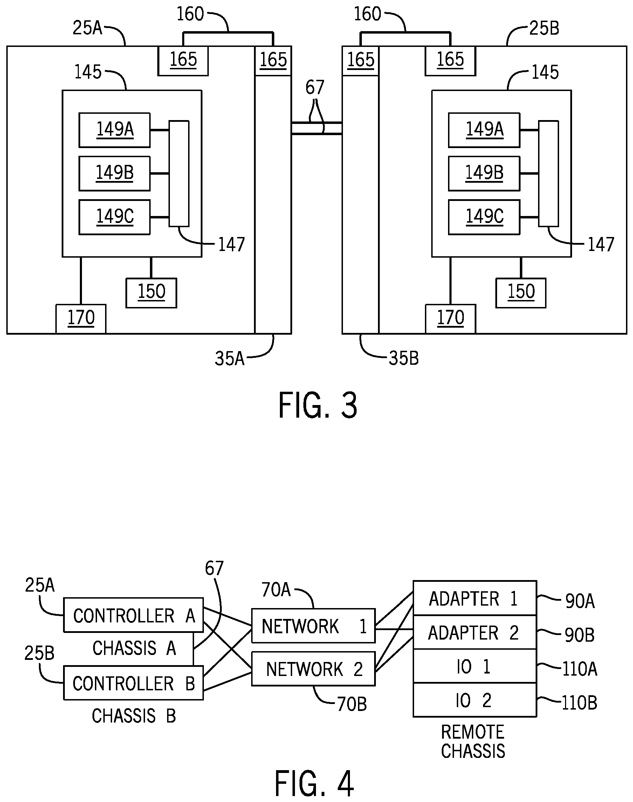

With reference also to Fig. 3, the processor 145 in each of the processor modules 25 is a multi-core processor. The processor 145 in the first processor module 25A includes at least a first processing core 149A, a second processing core 149B, and a third processing core 149C. Similarly, the processor 145 in the second processor module 25B includes at least a first processing core 149A, a second processing core 149B, and a third processing core 149C. Each processor 145 includes memory 147 accessible by each processing core 149A, 149B, 149C. A first portion of the memory 147 may be accessible only by the first processing core 149A, a second portion of the memory 147 may be accessible only by the second processing core 149B, a third portion of the memory 147 may be accessible only by the third processing core 149C, and a fourth portion of the memory 147 may be shared between the three processing cores 149A, 149B, 149C. Each processing core 149 is configured to execute a series of instructions, where the instructions are stored in non-transient memory 150 for retention through a power-cycle but may be loaded into the memory 147 on the processor 145 for faster run-time execution. Each processing core 149 may be configured to execute its respective series of instructions either asynchronously or synchronously with the other processing core. Optionally, the processor 145 may include other numbers of processing cores 149 according to an application's requirements.

Each of the modules also includes a clock circuit 155, and each clock circuit 155 is preferably synchronized with the other clock circuits 155 according to, for example, the IEEE-1588 clock synchronization standard. Each clock circuit 155 generates a time signal configurable to report the present time accurate to either microseconds or nanoseconds. Although identified in Fig. 2 with a single reference numeral, the processors 145, memory 150, and clock circuits 155 need not be identical devices for each type of module. Rather, each type of module includes a processor 145, a memory 150, and a clock circuit 155 according to the requirements of the corresponding module.

Communication between modules mounted in the same chassis or contained within a single housing occurs via a backplane 160. The backplane 160 may be a single backplane or dual backplanes and include a corresponding backplane connector 165. Modules communicating via network media include ports 170 configured to process the corresponding network protocol. The input module 100 includes input terminals 175 configured to receive the input signals from the controlled devices. The input module 100 also includes any associated logic circuitry 180 and internal connections 185 required to process and transfer the input signals from the input terminals 175 to the processor 145. Similarly, each output module 105 includes output terminals 190 configured to transmit the output signals to the controlled devices. The output module 105 also includes any associated logic circuitry 195 and internal connections 197 required to process and transfer the output signals from the processor 145 to the output terminals 190.

In order to communicate via the network 65, two end points establish a connection between each other. A connection is the transport layer mechanism in an industrial protocol to transfer bi-directional data between two end points typically at a given periodic interval. Some connection types do not transfer data at periodic intervals, but instead, transfer data either on occurrence of an event or in response to a programmatic request/response mechanism. Some connections transfer data in only one direction while in the reverse direction only a heartbeat indication is sent to keep the connection alive. But, in general, connections transfer data in both directions.

A connection is opened by a connection open service request from a connection originator module to a connection target module through zero or more intermediate modules via messages sent over backplane(s) and/or network(s). The connection originator module is commonly a controller module in a controller chassis or a human machine interface (HMI). The connection target module may be, for example, an IO module, a motor drive module, another controller module, network adapter module, or a network bridge module in the same chassis as the controller module or in a remote chassis. The intermediate modules may be one or more of a network bridge module, network adapter module, and/or other network devices in the network infrastructure 70. The connection open request message contains parameters defining the connection such as a connection type, data size to transfer in each direction, a duration of a periodic interval at which the message is transmitted, a connection timeout duration, an end-to-end path from the originator module to the target module through intermediate modules, and the like. These parameters are used to allocate resources (e.g., CPU bandwidth, memory, and network bandwidth) to service the connection at runtime on a module associated with the connection. When resources are successfully allocated on the modules associated with a connection, a success response is conveyed back from the target module to the originator module in a reverse direction from the connection open request, and the connection is operational for runtime data transfer. If the resources cannot be allocated on one of the modules associated with a connection or if one of the modules cannot communicate the connection open request message to the next module in the path, then a failure response is returned to the originator module from the module at which the connection open request failed. As used herein, the term connection originator module refers to a physical module in the industrial control system 5 that is issuing a connection open service request. The term connection target module refers to a physical module in the industrial control system 5 that is receiving the connection open service request.

Once the connection has been established, the modules are no longer referred to as an originator module and a target module, as used during the open/close process. Rather, the terms producer and consumer are used to identify a runtime data producer and data consumer in a connection. Since the data transfer is bidirectional in general, each module in the connection is both a producer and a consumer, depending on the source and direction of the data flow. As used herein, the term producer refers to a physical module in the industrial control system that is transmitting data to another physical module via the connection established between the two modules. The term consumer refers to a physical module in the industrial control system that is receiving data from another physical module via the connection established between the two modules.

After a connection is opened, it can be closed either through a connection close service request from the originator module to the target module of the connection through any intermediate modules that are part of the connection. Optionally, the connection may also be closed through a runtime connection timeout mechanism. During runtime, every module that is part of a connection monitors data reception from its upstream module(s) in one or both directions as appropriate for an end module or an intermediate module, respectively, and when data is not received in the monitored direction for a length of time equal to the connection timeout duration, the module at which the connection timeout occurred will close the connection to recover allocated resources. A connection timeout may happen as a result of a module failure or of a communication failure in a network or a backplane.

According to one aspect of the invention, the controllers 25 communicate with other devices via the network 65 using a concurrent connection. A concurrent connection provides for multiple end-to-end paths in a single connection, improving the reliability of a HA control system. A HA control system typically includes several redundant subsystems such as redundant industrial controllers, redundant backplanes, redundant bridges, redundant adapters, redundant input/output (IO) modules, redundant motor drives, and/or redundant communication networks. Physical redundancy is provided in each subsystem such that if a failure occurs in one of the elements in a subsystem the operation can continue via the other element(s). With reference next to Fig. 4, one embodiment of a HA control system with redundant subsystems is illustrated. The illustrated embodiment includes two controllers 25, Controller A and Controller B, in separate chassis. The controllers 25 communicate with each other through a dedicated channel 67 between chassis. Each of the controllers 25 is connected to two network infrastructures 70, Network 1 and Network 2, through network cables. The remote chassis contains two IO modules 110, IO 1 and IO 2, and two network adapter modules 90, Adapter 1 and Adapter 2. The IO modules 110 and network adapter modules 90 on the remote chassis communicate with each other through dual backplanes within the remote chassis. The network adapter modules 90 are each connected to the two network infrastructures 70 through network cables. The IO modules 110 have a limited number of IO terminal points, for example, eight IO terminals, which can be connected to controlled devices. The illustrated example provides eight separate end-to-end paths for a concurrent connection established between the controllers 25 and the IO modules 110. Although illustrated with a single pair of redundant IO modules 110 and eight IO terminals, a typical HA control system has thousands of such redundant IO terminal points wired to controlled devices throughout the controlled machine or process.

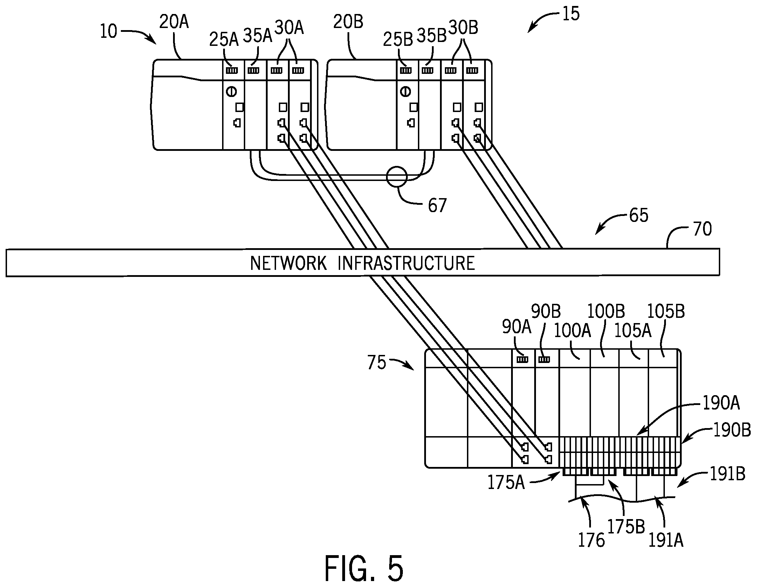

In a HA control system, a concurrent connection is used for bi-directional data transfer between redundant end modules, for example, between the redundant controllers 25A, 25B and redundant input modules 100A, 100B or output modules 105A, 106B shown in Fig. 5. A concurrent connection is the fault tolerant transport layer mechanism to transfer bi-directional data between multiple redundant end points in a HA control system at periodic intervals, responsive to events triggering a transfer, or responsive to a request/response transfer. A concurrent connection sets up and manages bi-directional data transfer between redundant end modules over multiple redundant end-to-end paths using the physical redundancies in each subsystem such that one or more failures in different subsystems will not affect data transfer so long as at least one end module is available at each end and at least one end-to-end path is available for data transfer between the modules at each end of the connection. Concurrent connections have architectural flexibility to deal with varying levels of physical redundancy in each subsystem. For example, a concurrent connection can handle subsystems with no, or with varying levels of redundancy, such as a single controller, dual redundant adapters, and triple redundant IO modules. A typical HA control system has thousands of concurrent connections between redundant controllers and redundant IO modules, between redundant controllers and other redundant controllers, between redundant controllers and a human machine interface (HMI), or a combination thereof. Although illustrated in separate chassis 10, 15, it is contemplated that redundant controllers 25A, 25B may be present in a single chassis or a pair of redundant controllers may be provided where each chassis includes two controllers 25.

Execution describing data flow in a single concurrent connection will be discussed with respect to data flow from the redundant IO modules 110 on the remote chassis 75 shown in Fig. 4 as producers to the redundant controllers 25 as consumers. It should be noted that in the following description for the data flow, the terms upstream and downstream are used with respect to the direction of data flow from the producer to the consumer.

For every data production cycle, an IO application layer task executing on each of the redundant Input IO modules 110 on the remote chassis 75 will sample input signals from the controlled devices. The IO application layer task executing on each of the redundant IO modules 110 will then exchange sampled input data with each other via the backplane 160 in the remote chassis 75 and reach an agreement on data to produce and an associated data sequence number to use during the current data production cycle. The IO application layer task in each redundant IO modules 110 will then provide the same agreed upon data and sequence number to a concurrent connection layer executing on the redundant IO modules 110 along with the unique concurrent connection identifier corresponding to each concurrent connection. The concurrent connection layer on a redundant IO modules 110 will use the unique concurrent connection identifier for each concurrent connection to find the per concurrent connection control data structure stored on that module.

The concurrent connection layer will then build a concurrent connection data packet for the given concurrent connection and send it to downstream adapter modules 90, Adapter 1 and Adapter 2, over the backplane 160 in the remote chassis 75. The concurrent connection data packet may contain one or more backplane or network specific header(s), as required for the communication medium on which the data packet is to be transmitted, followed by an industrial protocol header, which includes information such as the packet type, a hop connection identifier, and the like. The protocol header is followed by a concurrent connection header, data, and, lastly, a packet CRC. The concurrent connection header includes information such as the unique concurrent connection serial number, the data sequence number generated by the application layer task, and a separate CRC determined as a function of the data in the concurrent connection header and the data payload. This separate CRC in the concurrent connection header is used to ensure integrity of the concurrent connection header and the data from producer to consumer. The final, packet CRC is used during communication on a network or a backplane on a hop-by-hop basis.

When the adapter module 90 receives a concurrent connection data packet from an upstream IO module 110 over the backplane, the adapter module 90 will verify the separate CRC present in the concurrent connection header is valid. If the CRC check on the separate CRC fails, the adapter module 90 will drop the concurrent connection data packet. If the separate CRC check passes, then the adapter module 90 will use the hop connection identifier and concurrent connection serial number in the data packet to identify the hop connection from which it received the data packet and the corresponding per concurrent connection control data structure stored on the adapter module 90. The adapter module 90 will then check if the data sequence number in the data packet is newer than a value of a data sequence number stored in the concurrent connection control data structure. If the sequence number is a duplicate to the stored value or is older than the stored value, the adapter module 90 will drop the data packet. If the sequence number is newer than the prior stored value, the adapter module 90 will store that new sequence number in the concurrent connection control data structure and build data packets for transmission to each of the next two network modules downstream along the concurrent connection from the adapter modules 90.

This procedure defines a forward first arrival scheme for the adapter module 90. In other words, the adapter module 90 will only forward the first concurrent connection data packet received from the pair of IO modules 110 with the same data. The adapter module 90 is indifferent whether the data packet is received from IO Module 1 or IO Module 2, but rather is only concerned that the first packet of the two packets is retransmitted to the next hop, while the second, or any additional redundant data packets are dropped. Each device in the redundant network 70 along the per hop connection path for the concurrent connection performs a similar forward first arrival scheme such that only two data packets are transmitted between each hop of the concurrent connection.

When the controller module 25 receives a concurrent connection data packet from an upstream network device, the controller module 25 will follow the same process as described above for receiving and utilizing only the first received data packet from an upstream module. The controller module 25 will verify the CRC values within the data packet. If all checks pass, then the controller module 25 will provide the data and sequence number to an application layer task executing in the controller 25. The application layer tasks in each of the two controllers 25 will exchange the data and sequence number received by one controller with the other controller and will arrive at an agreed upon input data to use for a user control program executing on the controllers 25.

As discussed above, safety controllers are configured to achieve a desired safety integrity level. The diagnostic capabilities for achieving the desired safety integrity level may include, for example, redundant input and output channels, monitoring of an output channel to verify a desired control signal is being transmitted, generating test signals to verify the input or output channel change state, and the like. With reference again to Fig. 2, the memory 150 within each controller 25 may be divided into two portions. A first portion of the memory 150 is defined as standard memory, and a second portion of the memory is defined as safety memory. The processor 145 may be a single processor configured to execute both the standard functions and the safety functions. If a single processor is executing both the standard functions and the safety functions, it is preferrable that the processor 145 include multiple processing cores 149, as shown in Fig. 3, where at least one of the processing cores is configured to execute the standard functions and at least one of the processing cores is configured to execute the safety functions. Optionally, the processor 145 may include dual processors where one processor is configured to execute the standard functions and another processor is configured to execute the safety functions. Data in the standard portion of the memory 150 may have access limited to the standard processing core and/or standard processor. Similarly, data in the safety portion of the memory 150 may have access limited to the safety processing core and/or safety processor. One safety function performed by the safety processing core and/or safety processor may be to execute a parallel program to a control program executing on the standard processing core and/or standard processor. The safety processing core and/or safety processor may compare data from the control program executed by the standard processor to data from the control program executed by the safety processor. If the data matches, the safety controller determines that the standard controller is functioning properly. Another safety function performed by the safety processing core and/or safety processor may be to receive input signals fed back to an input module which correspond to an output signal from an output module. The safety processing core and/or safety processor may read a desired value to be output from each channel of the output module and compare the desired value to the input signal to verify correct operation of the output channel. Still other diagnostic and safety functions may be executed within the safety processing core and/or safety processor to achieve the desired SIL rating.

According to an exemplary application, it is contemplated that each controller 25 in a high availability system, such as that shown in Fig. 5, is a safety controller. Each safety controller 25 may be configured to independently achieve a SIL-2 safety rating. In other words, the safety controller 25 executing by itself to control a machine or process includes the required run time diagnostic capabilities to detect a failure or incorrect operation of the machine or process being controlled by the safety controller 25 such that the controlled system obtains the SIL-2 rating. However, each safety controller 25 is also arranged in the redundant configuration of Fig. 5 to operate as a HA controller. When the safety controllers 25 are paired together in the HA configuration, the controlled system may obtain a SIL-3 safety rating.

According to one aspect of the invention, the industrial control system 5 may be configured to utilize the paired safety controllers 25A, 25B in multiple configurations. In a first configuration, the two safety controllers 25A, 25B operate in tandem to provide a first safety rating for the controlled machine or process. This first safety rating may be an identical safety rating to the safety rating provided by a single safety controller 25. If one of the two safety controllers 25 detects a failure which will prevent that safety controller 25 from continuing normal operation, the other safety controller assumes full control of the machine or process. A technician is alerted of the failure such that maintenance may be performed to restore both safety controllers 25 to full operation. In this manner the paired safety controllers 25 provide a consistent safety rating for the controlled machine whether both safety controllers 25 are operating or a single safety controller 25 is operating. This configuration provides a higher availability safety system. In traditional operation, the failure of the first safety controller would have resulted in the industrial control system 5 being brought to a safe operating state. Thus, the two safety controllers can provide high availability operation of a safety system with a consistent safety rating in the event of a single failure.

In a second configuration, the two safety controllers 25A, 25B may operate in tandem to provide a first safety rating for the controlled machine or process but permit continued operation of the controlled machine or process at a second safety rating, lower than the first safety rating, in the event of a failure of one of the safety controllers 25A or 25B. The presence of two safety controllers 25A, 25B operating in tandem permits additional diagnostic capabilities not available to a single safety controller 25 controlling a machine or process. Thus, the two safety controllers 25A, 25B may achieve, for example, a SIL-3 safety rating when operating in tandem to control the machine or process. When one of the two safety controllers 25A or 25B detects a failure which will prevent the safety controller from continuing normal operation, the other safety controller still assumes full control of the machine or process. Because some of the diagnostic capabilities that were available with dual controllers are no longer available with a single controller, the system is only operating at the safety rating, such as a SIL-2 safety rating, which may be achieved by the single safety controller. This operation is considered high availability operation with degradation. The controlled machine or process is able to continue operating in the presence of a single failure even if the safety rating at which it operates is reduced.

High availability operation with degradation provides two different options of continued operation. According to one aspect of the invention, an application may only require operation at the lower safety rating. Under such an application, the system provides safety at greater safety rating than required during normal operation while also having high availability operation at the minimum required safety rating if one of the safety controllers 25 experiences a fault condition. According to another aspect of the invention, an application may require operation at the higher safety rating. In such an application, it may still be desirable to provide high availability operation, such that the controlled machine or process does not immediately shut down or enter another predefined safety state upon detection of the first fault condition. Rather than an immediate shut-down or immediate entry into the safety state, the controlled machine or process may be permitted to continue operation for some period of time to complete a process or operation and then be shut down or brought to a safe operating state by the machine operator if needed to complete the repair. Upon completion of the repair, the controlled machine or process resumes operation at the higher safety rating. As long as the repair is completed within a mean repair time for the controlled machine or process, the application is permitted to be rated at the higher safety rating during normal operation. The mean repair time is a time defined by the application and may be, for example, in a range between twenty-four (24) and seventy-two (72) hours.

In operation, the present invention coordinates startup of multiple safety controllers 25 to prevent spurious safety faults. When power is cycled to an industrial control system 5, different devices will become powered up and fully operational at different rates. Even identical components, such as two controllers 25 will power up at different rates according to manufacturing or installation variations, differences in tasks executing on the controllers 25, and the like. Because safety controllers 25 perform verification of the operation of each controller as one of the diagnostic checks to achieve a desired safety rating level, the potential exists for one controller 25 to become fully operational prior to the other controller. If the safety controller 25 executing first performs a diagnostic check prior the second controller becoming operational, the safety controller 25 which was operational first may detect a fault condition and put the industrial control system 5 into a safe operating state before the second controller is fully operational.

In order to coordinate startup of multiple safety controllers 25, one of the safety controllers is designated the first, or primary, safety controller 25A and another of the safety controller is designated as the second, or secondary, safety controller 25B. The first safety controller 25A will coordinate operation of the two safety controllers 25 to ensure that the safety controllers start up or are resynchronized without having an unintended fault condition detected.

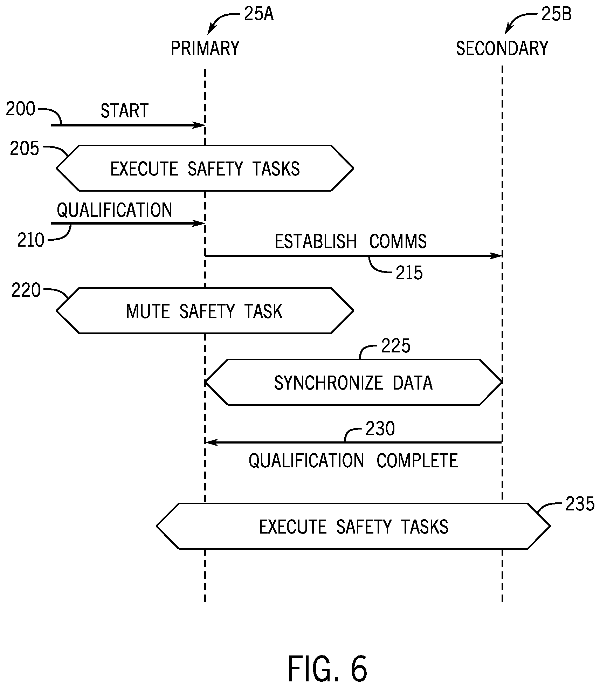

Turning next to Fig. 6, an initial start sequence between two safety controllers 25A, 25B is illustrated. At step 200, the first safety controller 25A receives a start command. The start command may be generated by a power cycle or by a reset of the industrial control system 5. Optionally, the start command may be generated by one of the redundancy modules 35, where the redundancy modules 35 are configured to coordinate operation of the safety controllers 25 operating in a higher availability operating mode. According to still another aspect of the invention, the start command may be initiated by a user indicating when the safety controllers 25 are to begin operating in tandem. At step 205, the first safety controller 25A begins executing safety tasks by itself. As discussed above, each safety controller 25A may execute one or more safety tasks to achieve at least a minimal desired safety rating. At step 210, the first safety controller 25A is then commanded to begin the qualification process. By executing the safety tasks at least one time, the first safety controller 25A obtains values of safety data in the first safety controller. The safety data may include, but is not limited to, present values of input and output signals, internal data values, such as timer or counter values, and/or variable information such as variable names or addresses. Optionally, the first safety controller 25A may be configured to begin directly with the qualification process. The safety data may include default values and correspond to a desired set of initial values for the safety tasks.

After receiving the qualification command, the first safety controller 25A establishes a dedicated communication channel with the second safety controller 25B. The dedicated communication channel operates via the redundancy modules 35 and the dedicated interface cables 67 to avoid other network communications that may be present on the network 65. Once a communication channel is established, the first safety controller 25A mutes the safety task, as shown in step 220. Muting the safety task means the first safety controller stops executing the program instructions for the safety task to update input values or to determine new output values such that the status of the safety data is not changed in memory 150. Any input values for safety data are temporarily not read, and because the input values are not being updated, the present values of data utilized by the safety tasks and the present values of output signals generated by the safety tasks remain unchanged. All data for the safety tasks is, therefore, temporarily maintained at its value immediately prior to muting the safety task.

At step 225, the first safety controller 25A synchronizes safety data between the first safety controller 25A and the second safety controller 25B. The value of safety data obtained immediately prior to muting the safety task is transferred from the first safety controller 25A to the second safety controller 25B. Additional details of the transfer are included below. Upon completion of the data transfer, the second safety controller 25B notifies the first safety controller 25A that the data transfer is complete, as shown in step 230. At step 235, the two safety controllers 25A, 25B begin execution of the safety tasks in tandem on both safety controllers 25A, 25B.

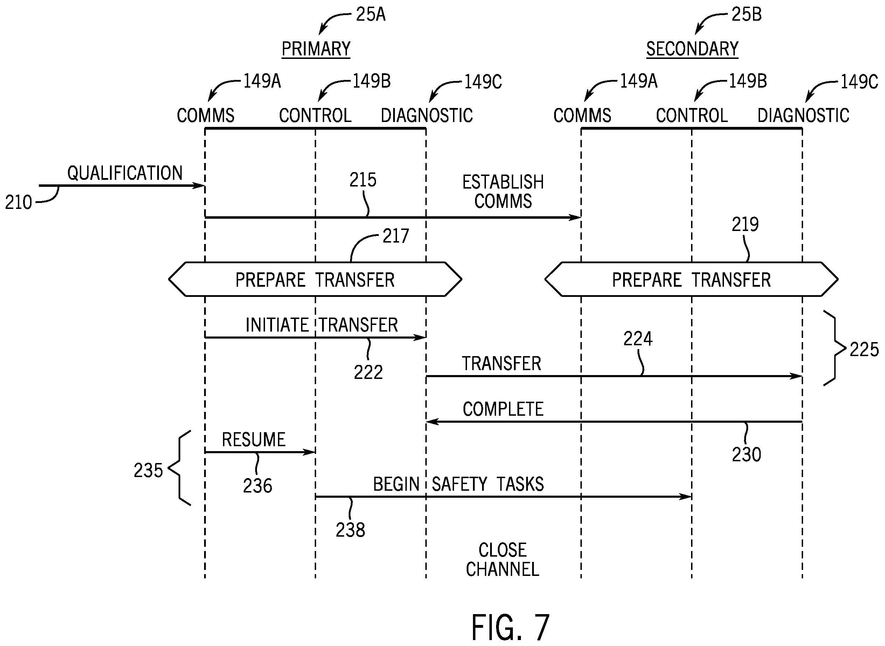

Turning next to Fig. 7, additional details on the safety data transfer are provided. As discussed above, the processor 145 in each safety controller 25 includes multiple processing cores 149. The three columns for each processor 145 correspond to tasks performed by one of the processing cores 149 in each safety controller 25. The first processing core 149A is configured to perform communication functions and is referred to herein as a communication core 149A. The second processing core 149B is configured to perform control functions and is referred to herein as a control core 149B. The third processing core 149C is configured to perform either diagnostic functions or qualification functions and is referred to herein as a safety core 149C.

The steps shown in Fig. 7 start with the first safety controller 25 receiving a command to start the qualification process, as shown at step 210. At step 215, the communication core 149A in the first controller 25 establishes a dedicated communication connection with the second controller 25. The communication core 149A in the first controller 25A is configured to interact with the communication core 149A in the second controller 25B. Each communication core executes communication functions, such as identifying an available channel, allocating a required memory resource, assigning a connection identifier for the connection, and the like in order to manage communication functions not only over the dedicated communication interface 67 but also over the network 65. Thus, the two communication cores 149A in each controller 25 are configured to establish and manage connections between devices.

At steps 217 and 219, the first controller 25A and the second controller 25B each prepare the respective controller for transferring safety data from the first controller 25A to the second controller 25B. As a first step in preparing each controller 25 for transferring safety data, the communication cores 149A may make connection parameters for the dedicated communication channel available to one or both of the other corresponding cores 149B, 149C. The parameters may include, for example, the connection identifier, a connection path, and the like. According to one aspect of the invention, the communication core 149A transmits connection parameters to the diagnostic core 149C via a communication bus present on the processor 145. According to another aspect of the invention, the communication core 149A stores the connection parameters in a portion of memory 147 on board the processor 145 or in a portion of memory 150 external from the processor that is accessible by each core 149. In this manner the communication core 149A may store the connection parameters in memory 147 or 150 when the connection is established and one of the other cores 149B, 149C can read the connection parameters in order to subsequently communicate data between the controllers 25 using the dedicated channel.

As another step in preparing the safety data for transfer, the first safety controller 25A wants to ensure that safety data remains unchanged for the duration of the data transfer. The first safety controller 25A, therefore, mutes any tasks executing on the processor 145 that may change safety data. Safety tasks, also referred to as diagnostic functions, executing on the diagnostic core 149C monitor operation of the controlled system and put the controlled system into a safe operating state if an error is detected. These safety tasks are temporarily halted, have outputs maintained at a constant value, or in some other fashion muted such that the data output by the safety tasks remains unchanged. Similarly, data monitored by the safety tasks, such as input signals, heartbeat communication signals, timers, and the like may be temporarily frozen or a snapshot of values is stored. **In** this manner, all data related to safety tasks, or diagnostic functions, is temporarily maintained at a constant value.

Once the data has been prepared for transfer, the communication core 149A in the first safety controller 25A may initiate transfer, as shown in step 222. According to one aspect of the invention, the parameters for the dedicated communication channel established at step 215 were previously stored in a memory 147, 150 accessible by both the communication core 149A and the diagnostic core 149C. Initiating transfer may simply involve setting a status flag, sending a message, or the like from the communication core 149A to the diagnostic core 149C to indicate to the diagnostic core 149C that it may begin transferring data. Optionally, a data packet may be transferred between the communication core 149A and the diagnostic core 149C as part of the initiate transfer process, where the data packet includes parameters for the dedicated communication channel between safety controllers 25.

As shown in step 224, the diagnostic core 149C for the first safety controller 25A communicates directly with the diagnostic core 149C for the second safety controller 25B to transfer safety data between the controllers. Having the parameters for the dedicated communication channel and because each core 149 is part of the same processor 145, each core 149 is able to access the internal communication bus connecting the processor to the port in which the dedicated communication interface 67 is connected. Utilizing the diagnostic core 149C for handling data transfer will significantly decrease the amount of time required to perform the transfer of safety data and, thereby increase the speed at which the two safety controllers 25 may become operational. The diagnostic core 149C is typically reserved for performing the diagnostic functions. Because the diagnostic functions are temporarily muted during the qualification process, little or no execution of the diagnostic functions is required. The majority of the processing capability for the diagnostic core 149C is available to perform qualification tasks, such as managing transfer of safety data between controllers 25. Conversely, the communication core 149A is responsible for managing all of the communications for each safety controller 25 including managing both dedicated communications between each controller and all other traffic present on the network 65 and received at the safety controller 25. The processing load in the communication core 149A is not necessarily reduced during qualification and may, in fact, be at a greater than normal level as other devices within the industrial control system 5 are starting up, establishing connections, transferring initial data, and the like during a power cycle sequence. Therefore, utilizing the diagnostic core 149C rather than the communication core 149A to manage the transfer of safety data increases the rate at which safety data is transferred, reducing the overall time at which safety tasks must remain muted.

As the safety data is transmitted between the diagnostic core 149C in the first safety controller 25A and the diagnostic core 149C in the second safety controller 25B, the diagnostic core 149C in the first safety controller 25A may maintain a rolling value of a checksum for the safety data. A checksum is commonly determined by passing data through a function, such as a hash function, and outputting the checksum. The checksum will be unique for each set of data passing through a function, and the checksum will be unique for the same data passing through different functions. Thus, a source device generating a checksum and a destination device verifying the checksum must use the same function for generation of the checksum and the same data must be passed through the identical functions in order to arrive at the same checksum on a source device and a destination device. The length of safety data to be passed between the first safety controller 25A and the second safety controller 25B will typically exceed the available data length in a single data packet. Therefore, the controller may be required to generate a single checksum of the entire volume of data prior to transmitting data or to parse the data into segments having a length equal to the length of data that may be present in a single data packet and generate separate checksums for each data packet. The destination may, in turn, determine a checksum for the entire set of data transferred or generate checksums for each data packet and compare the values to verify that the proper data has been transferred.

According to another aspect of the present invention, the first safety controller 25A performs a hybrid approach to determining a checksum of the safety data. The first safety controller 25A will generate a single checksum value for the entire set of safety data to be transferred. However, to increase the rate at which data is transferred and to minimize the time during which safety tasks are muted, the first safety controller 25A will generate the checksum as the safety data is being transferred between controllers 25. As each data packet is prepared for transfer between controllers 25, the first safety controller 25A passes the data for that data packet to a checksum function. The first safety controller 25A will then store the output of the checksum function in a rolling value for the checksum. As the next data packet is prepared for transfer between controllers 25, the first safety controller 25A passes the data for that next data packet as well as the rolling value to the checksum function in order to obtain a new rolling value for the checksum. In this manner, the checksum is updated for each segment of data passed between the two controllers. When the final data packet is prepared, the first safety controller 25A will obtain a final checksum value for the entire data set. The first safety controller 25A passes this final value of the safety data to the second safety controller 25B for verification.

The second safety controller 25B may similarly perform the hybrid approach for determining the checksum of the safety data. As the second safety controller 25B receives an initial data packet from the first safety controller 25A, the second safety controller 25B passes the data from that data packet to the checksum function. The second safety controller 25B will then store the output of the checksum function in a rolling value for the checksum. As each subsequent data packet is received from the first safety controller 25A, the second safety controller 25B passes the data for that next data packet as well as the rolling value to the checksum function in order to obtain a new rolling value for the checksum. In this manner, the checksum is updated for each segment of data passed between the two controllers. When the final data packet is prepared, the second safety controller 25B will obtain a final checksum value for the entire data set. The second safety controller 25B compares the final value of the checksum determined at the second safety controller 25B to the final value of the checksum determined at and received from the first safety controller 25A to verify the safety data has been successfully transmitted.

Upon receipt of the safety data from the first safety controller 25A, the second safety controller 25B stores the safety data to memory 150 in the second safety controller 25B. According to some safety applications, the safety data may be stored in two forms during operation. For example, a first version of safety data may be stored directly in memory 150. A second version of safety data may be inverted prior to storing in memory. During operation, one safety task executing on the diagnostic core 149C may be a comparison of the values of the safety data in the two storage locations. With inverted safety data, an Exclusive-OR function performed on the two corresponding memory locations should always return a value of one, or a logical True value. If the value is other than one, the safety task determines that the memory in one of the two locations has failed. However, rather than transferring both the regular safety data and the inverted safety data, the first safety controller 25A may transmit just the regular value of the safety data. The diagnostic core 149C in the second safety controller 25B inverts the data and stores both a regular version and an inverted version of the safety data in memory 150 on the second safety controller 25B.

When the data transfer is complete, the second safety controller 25B provides an indication that the safety data has been transferred with integrity back to the first safety controller 25A, as shown in step 230. If any faults occur during the transfer, the second safety controller 25B may provide an indication of the fault as well. The diagnostic core 149C provides an indication to the communication core 149A that the safety data transfer is complete. At step 236, the communication core 149A in the first safety controller 25A provides an indication to the control core 149B that the first safety controllers 25A should resume executing safety tasks. The control core 149B in the first safety controller 25A transmits the signal to the control core 149B of the second safety controller 25B as well. Both safety controllers 25A, 25B are then able to begin execution of the safety tasks in tandem with identical safety data present in both safety controllers. Because both safety controllers 25A, 25B are executing and because both safety controllers have identical safety data, execution will be identical and comparisons between the two safety controllers as part of diagnostic functions will indicate that the two controllers are functioning properly. The process of transferring safety data described herein will prevent spurious faults from being detected during start-up after a power cycle or other reset of the industrial control system.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**The following is a list of further preferred embodiments of the invention:**
Embodiment 1. A method for transferring data between safety controllers during qualification, the method comprising the steps of:
   disabling a safety operation in a first safety controller;
   transferring safety data from a first safety core executing in the first safety controller to a second safety core executing in a second safety controller;
   verifying correct transfer of the safety data with the second safety core;
   storing the safety data in a safety memory present on the second safety controller with the second safety core; and
   enabling the safety operation in the first safety controller and the second safety controller in tandem when the safety data is present on the second safety controller.
Embodiment 2. The method of embodiment 1, further comprising the steps of:
   establishing a connection between a first communication core executing in the first safety controller and a second communication core executing in the second safety controller; and
   transferring the safety data between the first safety core and the second safety core via the connection and without passing the safety data through the first communication core or the second communication core.
Embodiment 3. The method of embodiment 2, wherein:
   the first safety core and the first communication core are each a unique processing core of a processor in the first safety controller, and
   the second safety core and the second communication core are each a unique processing core of a processor in the second safety controller.
Embodiment 4. The method of embodiment 1, wherein the step of storing the safety data in the safety memory present on the second safety controller with the second safety core further comprises the steps of:
   storing the safety data received from the first safety controller in a first location in the safety memory;
   inverting the safety data received from the first safety controller with the second safety core; and
   storing inverted safety data in a second location in the safety memory.
Embodiment 5. The method of embodiment 1, wherein the step of disabling the safety operation in the first safety controller further comprises the step of freezing a present value of the safety data in a safety memory present on the first safety controller.
Embodiment 6. The method of embodiment 1, wherein the step of verifying correct transfer of the safety data with the second core further comprises the steps of:
   generating a checksum with the first safety controller, wherein the checksum is a function of the safety data;
   transmitting the checksum to the second safety controller with the safety data;
   generating a second checksum with the second safety controller, wherein the second checksum is generated as a function of the safety data; and
   comparing the second checksum with the checksum received from the first safety controller.
Embodiment 7. The method of embodiment 6, wherein the step of generating the checksum further comprises the step of generating the checksum with the first safety controller as the first safety controller transfers the safety data from the first safety core to the second safety core.
Embodiment 8. An industrial control system, comprising:
   a first safety controller, including:
      a memory configured to store a first set of instructions to perform a control function, a second set of instructions to perform a diagnostic function, a third set of instructions to perform a qualification function, a fourth set of instructions to perform a communication function, and safety data, and
      a processor having a first core operative to execute the control function, a second core operative to selectively execute the diagnostic function and the qualification function, and a third core operative to execute the communication function;
   a second safety controller, including:
      a memory configured to store a first set of instructions to perform a control function, a second set of instructions to perform a diagnostic function, and a third set of instructions to perform a qualification function, a fourth set of instructions to perform a communication function, and safety data, and
      a processor having a first core operative to execute the control function, a second core operative to selectively execute the diagnostic function and the qualification function, and a third core operative to execute the communication function; and
      a dedicated communication interface connected between the first safety controller and the second safety controller, wherein:
         the first safety controller is operative to:
         disable the diagnostic function and enable the qualification function on the second core of the processor corresponding to the first safety controller, and
         transmit the safety data from the memory of the first safety controller to the second safety controller via the dedicated communication interface using the qualification function; and
         the second safety controller is operative to:
            store the safety data received from the first safety controller in the memory of the second safety controller with the qualification function executing on the second safety controller, and
            disable the qualification function and enable the diagnostic function in the second core of the processor corresponding to the second safety controller to execute the diagnostic function in tandem with the diagnostic function executing in the second core of the processor corresponding to the first safety controller.
Embodiment 9. **The** industrial control system of embodiment 8, wherein the third core of the processor for the first safety controller is operative to:
   execute the communication function to establish a connection via the dedicated communication interface between the processors for the first safety controller and the second safety controller;
   transfer connection parameters for the connection from the communication function to the qualification function executing on the second core of the processor for the first safety controller.
Embodiment 10. The industrial control system of embodiment 8, wherein:
   the safety data is transmitted from the memory of the first safety controller to the second safety controller in a plurality of data packets;
   the qualification function maintains a rolling value of a checksum for the safety data as the data is transmitted; and
   the first safety controller is further operative to transmit the rolling value of the checksum to the second safety controller with the qualification function when the checksum has been determined for all of the safety data to be transmitted.
Embodiment 11. The industrial control system of embodiment 10, wherein the qualification function executing on the second safety controller is further operative to verify correct receipt of the safety data by determining a second checksum for the safety data received and comparing the second checksum to the rolling value of the checksum received from the first safety controller.
Embodiment 12. The industrial control system of embodiment 8, wherein the second safety controller is further operative to store the safety data received from the first safety controller in the memory of the second safety controller by:
   storing the safety data received from the first safety controller in a first location in the memory;
   inverting the safety data received from the first safety controller with the qualification function executing on the second safety controller; and
   storing inverted safety data in a second location in the memory.
Embodiment 13. The industrial control system of embodiment 8, wherein the first safety controller is further operative to freeze a present value of the safety data in the memory present on the first safety controller during execution of the qualification function on the first and second safety controllers.
Embodiment 14. A method for transferring data between safety controllers during qualification, the method comprising the steps of:
   establishing a dedicated communication channel between a first communication core executing in a first safety controller and a second communication core executing in a second safety controller;
   preparing safety data for transfer from the first safety controller to the second safety controller;
   transferring parameters for the dedicated communication channel from the first communication core to a first safety core executing in the first safety controller;
   transferring the safety data from the first safety core to a second safety core executing in the second safety controller;
   verifying the safety data received at the second safety controller with the second safety core; and
   enabling operation of a safety task in tandem on the first safety core and the second safety core upon successful transfer of the safety data from the first safety controller to the second safety controller.
Embodiment 15. The method of embodiment 14, wherein:
   the first safety core and the first communication core are each a unique processing core of a processor in the first safety controller, and
   the second safety core and the second communication core are each a unique processing core of a processor in the second safety controller.
Embodiment 16. The method of embodiment 14, wherein the step of preparing safety data for transfer from the first safety controller to the second safety controller further comprises:
   disabling a safety task executing in the first safety core; and
   freezing the safety data at a present value when the safety task is disabled.
Embodiment 17. The method of embodiment 14, wherein:
   transferring the safety data from the first safety core to the second safety core requires a plurality of data packets;
   the method further comprises the steps of:
      maintaining a rolling value of a checksum for the safety data as the plurality of data packets are transmitted from the first safety core to the second safety core; and
      transmitting a final value of the checksum, corresponding to all of the safety data, from the fist safety core to the second safety core.
Embodiment 18. The method of embodiment 17, wherein the step of verifying the safety data received at the second safety controller with the second safety core further comprises:
   receiving the final value of the checksum at the second safety core;
   generating a second checksum in the second safety core as a function of the safety data received from the first safety core; and
   comparing the final value of the checksum received from the first safety core to the second checksum.
Embodiment 19. The method of embodiment 14, further comprising the steps of:
   storing the safety data received from the first safety controller in a first location in the memory of the second safety controller;
   inverting the safety data received from the first safety controller with the qualification function executing on the second safety controller; and
   storing inverted safety data in a second location in the memory of the second safety controller.
Embodiment 20. The method of embodiment 19 wherein the step of verifying the safety data received at the second safety controller with the second safety core further comprises comparing the safety data to the inverted safety data to verify the inverted safety data matches the safety data.

## Claims

1. A method for transferring data between safety controllers during qualification, the method comprising the steps of:
disabling a safety operation in a first safety controller;
transferring safety data from a first safety core executing in the first safety controller to a second safety core executing in a second safety controller;
verifying correct transfer of the safety data with the second safety core;
storing the safety data in a safety memory present on the second safety controller with the second safety core; and
enabling the safety operation in the first safety controller and the second safety controller in tandem when the safety data is present on the second safety controller.

2. The method of claim 1, further comprising the steps of:
establishing a connection between a first communication core executing in the first safety controller and a second communication core executing in the second safety controller; and
transferring the safety data between the first safety core and the second safety core via the connection and without passing the safety data through the first communication core or the second communication core.

3. The method of claim 2, wherein:
the first safety core and the first communication core are each a unique processing core of a processor in the first safety controller, and
the second safety core and the second communication core are each a unique processing core of a processor in the second safety controller.

4. The method of one of claims 1 to 3, wherein the step of storing the safety data in the safety memory present on the second safety controller with the second safety core further comprises the steps of:
storing the safety data received from the first safety controller in a first location in the safety memory;
inverting the safety data received from the first safety controller with the second safety core; and
storing inverted safety data in a second location in the safety memory.

5. The method of one of claims 1 to 4, wherein the step of disabling the safety operation in the first safety controller further comprises the step of freezing a present value of the safety data in a safety memory present on the first safety controller.

6. The method of one of claims 1 to 5, wherein the step of verifying correct transfer of the safety data with the second core further comprises the steps of:
generating a checksum with the first safety controller, wherein the checksum is a function of the safety data;
transmitting the checksum to the second safety controller with the safety data;
generating a second checksum with the second safety controller, wherein the second checksum is generated as a function of the safety data; and
comparing the second checksum with the checksum received from the first safety controller, and/or
wherein the step of generating the checksum further comprises the step of generating the checksum with the first safety controller as the first safety controller transfers the safety data from the first safety core to the second safety core.

7. An industrial control system, comprising:
a first safety controller, including:
a memory configured to store a first set of instructions to perform a control function, a second set of instructions to perform a diagnostic function, a third set of instructions to perform a qualification function, a fourth set of instructions to perform a communication function, and safety data, and
a processor having a first core operative to execute the control function, a second core operative to selectively execute the diagnostic function and the qualification function, and a third core operative to execute the communication function;
a second safety controller, including:
a memory configured to store a first set of instructions to perform a control function, a second set of instructions to perform a diagnostic function, and a third set of instructions to perform a qualification function, a fourth set of instructions to perform a communication function, and safety data, and
a processor having a first core operative to execute the control function, a second core operative to selectively execute the diagnostic function and the qualification function, and a third core operative to execute the communication function; and
a dedicated communication interface connected between the first safety controller and the second safety controller, wherein:
the first safety controller is operative to:
disable the diagnostic function and enable the qualification function on the second core of the processor corresponding to the first safety controller, and
transmit the safety data from the memory of the first safety controller to the second safety controller via the dedicated communication interface using the qualification function; and
the second safety controller is operative to:
store the safety data received from the first safety controller in the memory of the second safety controller with the qualification function executing on the second safety controller, and
disable the qualification function and enable the diagnostic function in the second core of the processor corresponding to the second safety controller to execute the diagnostic function in tandem with the diagnostic function executing in the second core of the processor corresponding to the first safety controller.

8. The industrial control system of claim 7, wherein the third core of the processor for the first safety controller is operative to:
execute the communication function to establish a connection via the dedicated communication interface between the processors for the first safety controller and the second safety controller;
transfer connection parameters for the connection from the communication function to the qualification function executing on the second core of the processor for the first safety controller, or
wherein:
the safety data is transmitted from the memory of the first safety controller to the second safety controller in a plurality of data packets;
the qualification function maintains a rolling value of a checksum for the safety data as the data is transmitted; and
the first safety controller is further operative to transmit the rolling value of the checksum to the second safety controller with the qualification function when the checksum has been determined for all of the safety data to be transmitted, and/or
wherein the qualification function executing on the second safety controller is further operative to verify correct receipt of the safety data by determining a second checksum for the safety data received and comparing the second checksum to the rolling value of the checksum received from the first safety controller.

9. The industrial control system of one of claims 7 or 8, wherein the second safety controller is further operative to store the safety data received from the first safety controller in the memory of the second safety controller by:
storing the safety data received from the first safety controller in a first location in the memory;
inverting the safety data received from the first safety controller with the qualification function executing on the second safety controller; and
storing inverted safety data in a second location in the memory.

10. The industrial control system of one of claims 7 to 9, wherein the first safety controller is further operative to freeze a present value of the safety data in the memory present on the first safety controller during execution of the qualification function on the first and second safety controllers.

11. A method for transferring data between safety controllers during qualification, the method comprising the steps of:
establishing a dedicated communication channel between a first communication core executing in a first safety controller and a second communication core executing in a second safety controller;
preparing safety data for transfer from the first safety controller to the second safety controller;
transferring parameters for the dedicated communication channel from the first communication core to a first safety core executing in the first safety controller;
transferring the safety data from the first safety core to a second safety core executing in the second safety controller;
verifying the safety data received at the second safety controller with the second safety core; and
enabling operation of a safety task in tandem on the first safety core and the second safety core upon successful transfer of the safety data from the first safety controller to the second safety controller.

12. The method of claim 11, wherein:
the first safety core and the first communication core are each a unique processing core of a processor in the first safety controller, and
the second safety core and the second communication core are each a unique processing core of a processor in the second safety controller.

13. The method of one of claims 11 or 12, wherein the step of preparing safety data for transfer from the first safety controller to the second safety controller further comprises:
disabling a safety task executing in the first safety core; and
freezing the safety data at a present value when the safety task is disabled.

14. The method of one of claims 11 to 13, wherein:
transferring the safety data from the first safety core to the second safety core requires a plurality of data packets;
the method further comprises the steps of:
maintaining a rolling value of a checksum for the safety data as the plurality of data packets are transmitted from the first safety core to the second safety core; and
transmitting a final value of the checksum, corresponding to all of the safety data, from the fist safety core to the second safety core, and/or
wherein the step of verifying the safety data received at the second safety controller with the second safety core further comprises:
receiving the final value of the checksum at the second safety core;
generating a second checksum in the second safety core as a function of the safety data received from the first safety core; and
comparing the final value of the checksum received from the first safety core to the second checksum.

15. The method of one of claims 11 to 14, further comprising the steps of:
storing the safety data received from the first safety controller in a first location in the memory of the second safety controller;
inverting the safety data received from the first safety controller with the qualification function executing on the second safety controller; and
storing inverted safety data in a second location in the memory of the second safety controller, and/or
wherein the step of verifying the safety data received at the second safety controller with the second safety core further comprises comparing the safety data to the inverted safety data to verify the inverted safety data matches the safety data.
